# EUROPÄISCHE PATENTSCHRIFT

(11) **EP 4 537 063 B1**
(45) Veröffentlichungstag und Bekanntmachung des Hinweises auf die Patenterteilung: **07.10.2026**
(21) Anmeldenummer: 23730419.1
(22) Anmeldetag: 31.05.2023
(51) Int. Cl.: C25F 3/24, C25F 7/00, G01F 1/84

(54) **ABSCHNITTSWEISE FORCIERT PLASMAPOLIERTE ROHRANORDNUNG, INSBESONDERE MESSROHRANORDNUNG, MESSAUFNEHMER MIT EINER SOLCHEN MESSROHRANORDNUNG UND VERFAHREN ZUM PLASMAPOLIEREN EINER MESSROHRANORDNUNG**
TUBE ARRANGEMENT POLISHED BY FORCED ELECTROLYTIC PLASMA POLISHING IN SECTIONS, IN PARTICULAR A MEASURING TUBE ARRANGEMENT, MEASURING SENSOR WITH SUCH A MEASURING TUBE ARRANGENMENT, AND METHOD FOR PLASMA POLISHING A MEASURING TUBE ARRANGEMENT
AGENCEMENT DE TUBE POLI EN SECTIONS PAR POLISSAGE ÉLECTROLYTIQUE FORCÉ AU PLASMA, EN PARTICULIER AGENCEMENT DE TUBE DE MESURE, CAPTEUR DE MESURE AVEC UN TEL AGENCEMENT DE TUBE DE MESURE, ET PROCÉDÉ DE POLISSAGE AU PLASMA D'UN AGENCEMENT DE TUBE DE MESURE

(30) Priorität: 13.06.2022 DE 102022114829
(43) Veröffentlichungstag der Anmeldung: 16.04.2025
(73) Patentinhaber: Endress+Hauser Flowtec AG, 4153 Reinach (CH)
(72) Erfinder: ZIMMERMANN, Julien, 5432 Neuenhof (CH); PREISINGER, Lisa, 4053 Basel (CH); POPULUS, Yannick, 68440 Steinbrunn-Le-Bas (FR)
(74) Vertreter: Endress + Hauser Group Services (Deutschland) AG+Co. KG
(86) Internationale Anmeldenummer: PCT/EP2023/064518
(87) Internationale Veröffentlichungsnummer: WO 2023/241912

(56) Entgegenhaltungen:
- DE-U1- 202008 011 646
- JP-A- H06 102 076
- US-A- 5 095 761
- US-B2- 7 631 561

## Beschreibung

Die vorliegende Erfindung betrifft eine abschnittsweise forciert plasmapolierte Messrohranordnung, Messaufnehmer mit einer solchen Messrohranordnung und Verfahren zum Plasmapolieren einer Messrohranordnung.

Eine gattungsgemäße Messrohranordnung umfasst zwei Trägerkörper mit jeweils mindestens einer Bohrung; und mindestens ein Messrohr mit einem Lumen zum Führen eines Mediums, wobei Endabschnitte des mindestens einen Messrohrs jeweils mit einem der Trägerkörper verbunden sind, wobei mindestens ein Endabschnitt des Messrohrs plasmapoliert ist.

Das Patent US 5,095,761 A befasst sich mit Oberflächenqualitätsbeeinträchtigungen an Messrohren durch Schweißnähte und Beseitigung dieser Beeinträchtigungen durch mechanische Nachbearbeitung einschließlich Polieren. Um die Zugänglichkeit der Schweißnähte für die Nachbehandlung zu ermöglichen, sollen dies nur an Stirnseiten der Messrohre vorgesehen sein.

Ein Verfahren und einen Polierkopf zum Plasmapolieren von Rohren sind in der Offenlegungsschrift DE 2016 100 558 A1 sowie in dem Gebrauchsmuster DE 20 2008 011 646 U1 beschrieben, wobei der koaxial zum Rohr angeordnete Polierkopf, der als Kathode dient und kontinuierlich mit einem Elektrolyten versorgt wird, zum Polieren durch das Rohr bewegt wird.

Das chinesische Gebrauchsmuster CN 2020 72789 U offenbart eine Vorrichtung zum Elektropolieren der Innenwand dünner Rohre, bei welcher ein Kathodendraht entlang der Rohrachse geführt ist, und ein Elektrolyt durch das Rohr gepumpt wird, um das Plasma zu erzeugen. Insbesondere bei Rohren mit geringen Durchmessern, bzw. bei gebogenen Messrohren, erweisen sich diese Ansätze jedoch als problematisch, da die Zentrierung der Kathode schwierig ist und zudem das verfügbare Volumen zur Ausbildung der Plasmaschicht und zur Elektrolytzufuhr weiter begrenzt ist. Insofern als das Biegen der Messrohre bzw. das Fügen der Endabschnitte der Messrohre mit den Trägerkörpern zu Beeinträchtigungen der Oberflächeneigenschaften der Messrohre in den betroffenen Bereichen führt, ist eine Nachbehandlung der Oberflächen angezeigt, um die Oberflächenqualität wiederherzustellen. Es ist daher die Aufgabe der vorliegenden Erfindung, hier Abhilfe zu schaffen, wobei die gesuchte Lösung im Sinne einer Standardisierung industrieller Prozesse unabhängig von der Rohrform, also nicht nur für gebogene Rohre bzw. Messrohre geeignet sein soll.

Die Aufgabe wird erfindungsgemäß gelöst durch die Rohranordnung gemäß Anspruch 1, den Messaufnehmer gemäß dem unabhängigen Patentanspruch 6 und das Verfahren gemäß dem unabhängigen Patentanspruch 8.

Die erfindungsgemäße Rohranordnung insbesondere Messrohranordnung umfasst zwei Trägerkörper mit jeweils mindestens einer Bohrung; und mindestens ein Messrohr mit einem Lumen zum Führen eines Mediums, wobei Endabschnitte des mindestens einen Messrohrs jeweils mit einem der Trägerkörper verbunden sind, wobei die Bohrungen der Trägerkörper über das Lumen des Messrohrs miteinander kommunizieren,
wobei die Messrohranordnung einen forciert plasmapolierten Abschnitt aufweist, der sich in einem Bereich in dem der Strömungsquerschnitt nicht mehr als der Querschnitt des mindestens einen Messrohrs umfasst, über mindestens drei, insbesondere mindestens vier Durchmesser des mindestens einen Messrohrs erstreckt, wobei an den forciert plasmapolierten Abschnitt ein Ätzabschnitt folgt, wobei der Ätzabschnitt eine andere Oberflächenstruktur aufweist als der forciert plasmapolierte Abschnitt,
wobei das Messrohr einen zumindest abschnittsweise gekrümmten Verlauf mit mindestens einem Bogen aufweist, welcher einen Winkel von nicht weniger als 20° überstreicht, wobei der Bogen beispielsweise einen Krümmungsradius von nicht mehr als 10, Innendurchmessern des Messrohrs aufweist, wobei der forciert plasmapolierte Abschnitt den zumindest einen Bogen über zumindest die Hälfte der Länge des zumindest einen Bogens umfasst,
wobei der Innendurchmesser des Messrohrs nicht mehr als 30 mm beträgt.

In einer Weiterbildung der Erfindung umfasst der Ätzabschnitt eine elektropolierte Oberfläche, die ein größere Rauheit aufweist als die forciert plasmapolierte Oberfläche des ersten Abschnitts.

In einer Weiterbildung der Erfindung weist der forciert plasmapolierte Abschnitt eine Oberflächenrauheit auf, die nicht mehr als Ra = 0,4 µm, insbesondere nicht mehr als Ra = 0,3 µm beträgt.

Das Messrohr weist ein metallisches Gefüge auf, wobei in einer Weiterbildung der Erfindung der Ätzabschnitt eine Oberflächenstruktur aufweist, in welcher Korngrenzen des metallischen Gefüges freigeätzt sind.

In einer Weiterbildung weist das Messrohr einen zumindest abschnittsweise gekrümmten Verlauf mit mindestens einem Bogen auf, welcher insbesondere einen Winkel von nicht weniger als 30° überstreicht, wobei der Bogen beispielsweise einen Krümmungsradius von nicht mehr als als 6 Innendurchmessern des Messrohrs aufweist, wobei der forciert plasmapolierte Abschnitt den zumindest einen Bogen über zumindest zwei Drittel der Länge des zumindest einen Bogens umfasst.

In einer Weiterbildung der Erfindung beträgt der Innendurchmesser des Messrohrs nicht mehr als 15 mm und insbesondere nicht mehr als 10 mm.

Der erfindungsgemäße Messaufnehmer umfasst eine erfindungsgemäße Messrohranordnung, einen Grundkörper, welcher die beiden Trägerkörper biegesteif miteinander verbindet, einen elektrodynamischen Erreger zum Anregen von Biegeschwingungsmoden, mindesten einen Schwingungssensor zum Erfassen von Biegeschwingungen des Messrohrs.

In einer Weiterbildung der Erfindung umfasst die Messrohranordnung des Messaufnehmers zwei parallel geführte Messrohre, wobei der elektrodynamische Erreger dazu eingerichtet ist, Biegeschwingungen in mindestens einer Biegeschwingungsmode zwischen den Messrohren anzuregen, und wobei der zumindest eine Schwingungssensor dazu eingerichtet ist Biegeschwingungen zwischen den Messrohren zu erfassen.

Das erfindungsgemäße Verfahren zum abschnittsweisen Plasmapolieren einer Messrohranordnung umfasst:
Positionieren einer Kathode und einer Elektrolytversorgungsleitung bezüglich einer Messrohranordnung, wobei die Kathode eine Spitze aufweist, die nicht mehr als vier, beispielsweise nicht mehr als zwei und insbesondere nicht mehr als einen Innendurchmesser eines Messrohrs der Messrohranordnung von einer Stirnfläche der Messrohranordnung beabstandet ist;
Strömenlassen eines Elektrolyten durch die Messrohranordnung;
und Anlegen einer elektrischen Polierspannung zwischen der Kathode und der Messrohranordnung, die ausreichend ist, um ein Plasma in einem Abschnitt der Messrohranordnung aufrechtzuerhalten, das sich von einer Stirnfläche der Messrohranordnung über eine Länge von nicht weniger als vier, insbesondere nicht weniger als sechs und bevorzugt nicht weniger als acht Innendurchmesser des Messrohrs in die Messrohranordnung erstreckt,
wobei die Messrohranordnung zwei Trägerkörper mit jeweils mindestens einer Bohrung; und mindestens ein Messrohr mit einem Lumen zum Führen eines Mediums, umfasst, wobei Endabschnitte des mindestens einen Messrohrs jeweils mit einem der Trägerkörper verbunden sind, wobei die Bohrungen der Trägerkörper über das Lumen des Messrohrs miteinander kommunizieren, wobei mindestens ein Endabschnitt des Messrohrs forciert plasmapoliert ist.

In einer Weiterbildung der Erfindung weist der Elektrolyt eine Volumendurchflussrate pro durchströmbarer Querschnittsfläche der Messrohranordnung auf, die nicht weniger als 0,1 I/(min · cm²), beispielsweise nicht weniger als 0,2 I/(min · cm²) und insbesondere nicht weniger als 0,3 I/(min · cm²) beträgt.

In einer Weiterbildung der Erfindung weist der Elektrolyt eine Volumendurchflussrate pro durchströmbarer Querschnittsfläche der Messrohranordnung, die nicht mehr als 4 I/(min · cm²), beispielsweise nicht mehr als 2 I/(min · cm²) und insbesondere nicht mehr als 1 I/(min · cm²) beträgt.

Durch das Strömenlassen des Elektrolyten werden Abfallprodukte des Polierprozesses effizient von forciert plasmapolierten Oberflächenabschnitten der Messrohranordnung abtransportiert, und Gasblasen, die einer Aufrechterhaltung des Plasmas entgegenstehen, werden fortgespült.

In einer Weiterbildung der Erfindung beträgt die angelegte Polierspannung nicht weniger als 250 V, insbesondere nicht weniger als 300 V. Weiterhin beträgt die angelegte Polierspannung gemäß einer Weiterbildung der Erfindung nicht mehr als 500 V, insbesondere nicht mehr als 400 V.

In einer Weiterbildung der Erfindung umfasst der Elektrolyt Ammoniumsulfat und ggf. Schwefelsäure auf.

In einer Weiterbildung der Erfindung wird das Plasma bei strömendem Elektrolyten für eine Zeitspanne von nicht weniger als 2 min insbesondere nicht weniger als 3 min aufrechterhalten.

In einer Weiterbildung der Erfindung wird das Plasma bei strömendem Elektrolyten für eine Zeitspanne von nicht mehr als 10 min, insbesondere nicht mehr als 6 min aufrechterhalten.

In einer Weiterbildung ist die Messrohranordnung während des Plasmapolierens vollständig mit dem Elektrolyten gefüllt. Die vollständige Füllung mit Elektrolyten kann auch eine Gasbeladung des Elektrolyten oder eine Beladung des Elektrolyten mit Feststoffen umfassen.

In einer Weiterbildung der Erfindung weist der Elektrolyt Ammoniumsulfat und ggf. Schwefelsäure auf.

In einer Weiterbildung weist der Elektrolyt eine Leitfähigkeit von nicht mehr als 500 S/cm insbesondere nicht mehr als 400 mS/cm und bevorzugt nicht mehr als 350 mS/cm auf.

Die Erfindung wird nun anhand der in den Zeichnungen dargestellten Ausführungsbeispiele näher erläutert.

Es zeigt:
Fig. 1: ein schematisches Schnittbild eines Ausführungsbeispielseines erfindungsgemäßen Messaufnehmers mit einem Ausführungsbeispiel einer erfindungsgemäßen Messrohranordnung;
Fig. 2a: ein Schnittbild eines Messrohrs das mit einem erfindungsgemäßen Plasmapolierverfahren behandelt wurde;
Fig. 2b: ein Schnittbild eines Messrohrs das mit einem herkömmlichen Plasmapolierverfahren behandelt wurde;
Fig. 3a: ein schematisches Diagramm einer exemplarischen Stromdichteverteilung in Längsrichtung eines Messrohrabschnitts während der Durchführung des erfindungsgemäßen Verfahrens;
Fig. 3b: ein Diagramm der Oberflächenrauheit einer erfindungsgemäß behandelten Messrohrbaugruppe im Vergleich zu Messrohrbaugruppen, die mit Verfahren nach dem Stand der Technik behandelt wurden;
Fig. 4: eine schematische Darstellung eines ersten Ausführungsbeispiels einer Anordnung zur Durchführung des erfindungsgemäßen Verfahrens;
Fig. 5: ein Flussdiagramm zur Durchführung des erfindungsgemäßen Verfahrens;
Fig. 6a: eine schematische Darstellung eines zweiten Ausführungsbeispiels einer Anordnung zur Durchführung des erfindungsgemäßen Verfahrens; und
Fig. 6b: eine schematische Darstellung eines Abschnitts eines Messaufnehmers mit einem nach dem Plasmapolieren montierten Flansch.

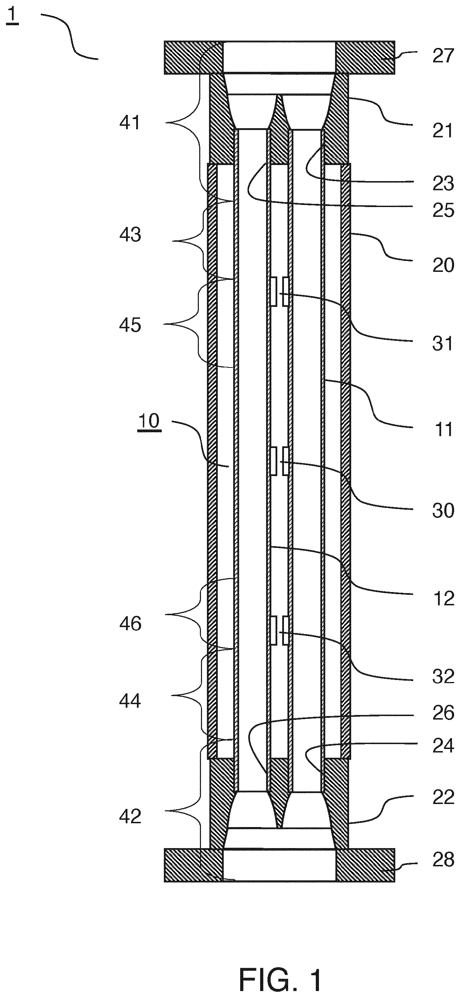

Der in Fig. 1 dargestellte Messaufnehmer 1 zum Messen einer oder mehrerer Messgrößen ausgewählt aus Massedurchflussrate, Dichte und Viskosität eines Mediums umfasst eine Messrohranordnung 10, die hier zwei - hier gerade - Messrohre 11, 12 und zwei Trägerkörper 21, 22 aufweist. Die Trägerkörper, die hier als Verteilerstücke dienen, umfassen jeweils durchgehende Bohrungen 23, 24, 25, 26 wobei die Messrohre 11, 12, jeweils mit ihren beiden Endabschnitten in einer der Bohrungen 23, 24, 25, 26 fixiert sind, beispielsweise durch Fügen, wie Schweißen oder Löten, Einwalzen, Pressen, Schrauben oder Kleben oder durch Kombinationen der vorgenannten Verfahren. Die Bohrungen sind hier nur schematisch dargestellt. Ihre konkrete Form ergibt sich aus strömungstechnischen Erwägungen, die im Zusammenhang mit der vorliegenden Erfindung nicht von Interesse sind. An den Trägerkörpern 21, 22 ist bei diesem Ausführungsbeispiel jeweils ein Prozessanschluss, hier ein Flansch 27, 28 zur Montage des Messaufnehmers in einer Rohrleitung befestigt, durch welche das zu messende Medium strömt. Die Flansche 27, 28 sind insbesondere nach dem forcierten Plasmapolieren montiert. Der Messaufnehmer umfasst weiterhin einen Grundkörper 20, durch den die beiden Trägerkörper 21, 22 starr miteinander verbunden sind, um Schwingungen zwischen den Trägerkörpern zumindest im Bereich der Eigenfrequenzen der Biegeschwingungsmoden bzw. Torsionsschwingungsmoden der Messrohre, 11, 12 zu unterdrücken, die zur Ermittlung der Messgrößen des Messaufnehmers 1 auszuwerten sind. Der Messaufnehmer umfasst, weiterhin einen elektrodynamischen Erreger 30 der zwischen den Messrohren 11, 12 wirkt, um insbesondere Biegeschwingungsmoden zwischen den Messrohren 11, 12 anzuregen, und zwei elektrodynamische Schwingungssensoren 31, 32, um Biegeschwingungen zwischen den Messrohren 11, 12 zu erfassen.

Erfindungsgemäß weist die Messrohranordnung 10 forciert plasmapolierte Endabschnitte 41, 42 auf, welche sich von den Messrohren abgewandten Stirnflächen der Messrohranordnung 10 durch die Bohrungen 23, 24, 25, 26 der Trägerkörper 21, 22 in die Messrohre 11, 12 hinein erstrecken. An die forciert plasmapolierten Endabschnitte 41, 42 schließt jeweils ein Ätzabschnitt 43, 44 an, der sich hier über eine Länge von einigen Messrohrdurchmessern erstreckt, wobei die Ätzabschnitte 43, 44 in elektropolierte Abschnitte 45, 46 übergehen. Die Oberflächeneigenschaften der einzelnen Abschnitte werden weiter unten erläutert.

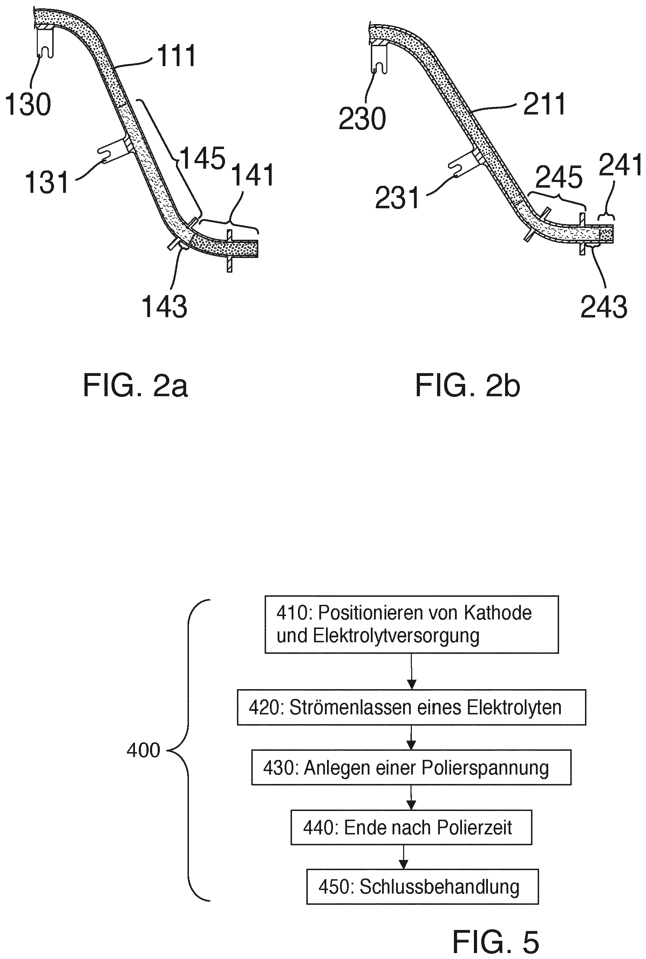

Wie in Fig. 2a anhand einer Detailansicht eines Längsschnitts eines halben Messrohrs 111 eines weiteren Ausführungsbeispiels gezeigt ist, können die Messrohre anders als beim Ausführungsbeispiel gemäß Fig. 1, in der Ruhelage gebogenen Verlauf aufweisen. Das in Fig. 2a gezeigte Messrohr 111 weist einen Erregerhalter 130 für einen elektrodynamischen Erreger im Scheitel eines mittleren Messrohrbogens auf, wobei durch den Halter 130 eine Messrohrquerschnittsebene verläuft, zu der das Messrohr 111 einen spiegelsymmetrischen Verlauf aufweist. Die Messrohranordnung weist weiterhin zwei hier nicht gezeigte elektrodynamische Schwingungssensoren auf, die symmetrisch zur Messrohrquerschnittsebene angeordnet sind, und von denen ein erster Sensorhalter 131 zum Halten eines ersten der elektrodynamischen Schwingungssensoren in Fig. 2a dargestellt ist. Das Messrohr 111 weist jeweils einen Endabschnitt mit einem endseitigen Messrohrbogen auf, an den ein kurzer gerader Abschnitt zur Befestigung in der Bohrung eines hier nicht dargestellten Trägerkörpers anschließt. Das Messrohr 111 weist einen forciert plasmapolierten Endabschnitt 141 auf, der sich in Längsrichtung von einer endseitigen Stirnfläche des Messrohrs bzw. des Trägerkörpers bis etwa zur Mitte des endseitigen Bogens 141 erstreckt, woran ein Ätzabschnitt 143 anschließt, der wiederum in einen elektropolierten Abschnitt 145 übergeht, der sich hier etwa bis zur Hälfte eines geraden Abschnitts des Messrohrs 111 zwischen dem endseitigen Messrohrbogen und dem mittleren Messrohrbogen erstreckt.

Fig 2b zeigt zum Vergleich einen Abschnitt eines Messrohrs 211 welches nicht forciert plasmapoliert und damit nicht erfindungsgemäß ist. Das Messrohr 211 weist hinsichtlich seiner Komponenten die gleiche Anordnung wie das erfindungsgemäße Messrohr auf. Es weist also auch einen Erregerhalter 230 für einen elektrodynamischen Erreger im Scheitel eines mittleren Messrohrbogens auf, wobei durch den Halter 230 eine Messrohrquerschnittsebene verläuft, zu der das Messrohr 211 einen spiegelsymmetrischen Verlauf aufweist. Die Messrohranordnung weist weiterhin zwei hier nicht gezeigte elektrodynamische Schwingungssensoren auf, die symmetrisch zur Messrohrquerschnittsebene angeordnet sind, und von denen ein erster Sensorhalter 231 zum Halten eines ersten der elektrodynamischen Schwingungssensoren in Fig. 2b dargestellt ist. Das Messrohr 211 weist jeweils einen Endabschnitt mit einem endseitigen Messrohrbogen auf, an den ein kurzer gerader Abschnitt zur Befestigung in der Bohrung eines hier nicht dargestellten Trägerkörpers anschließt. Das Messrohr 211 weist einen kurzen plasmapolierten Endabschnitt 241 auf, der sich in Längsrichtung von einer endseitigen Stirnfläche des Messrohrs bzw. des Trägerkörpers nur über etwa einen Messrohrdurchmesser erstreckt, woran ein Ätzabschnitt 243 anschließt, der wiederum in einen elektropolierten Abschnitt 245 übergeht, der sich hier nur bis etwa zum Ende des endseitigen Messrohrbogens erstreckt.

Aus dem Vergleich der Fign, 2a und 2b folgt, dass sich der forciert plasmapolierte Abschnitt 141 der erfindungsgemäßen Messrohranordnung der erfindungsgemäßen Messrohranordnung erheblich weiter in das Messrohr 111 erstreckt als der nicht forciert plasmapolierte Abschnitt 241 in das Messrohr 211 der Vergleichsmessrohranordnung. Entsprechendes gilt für die Erstreckung des elektropolierten Abschnitts 145 in Längsrichtung des Messrohrs 111.

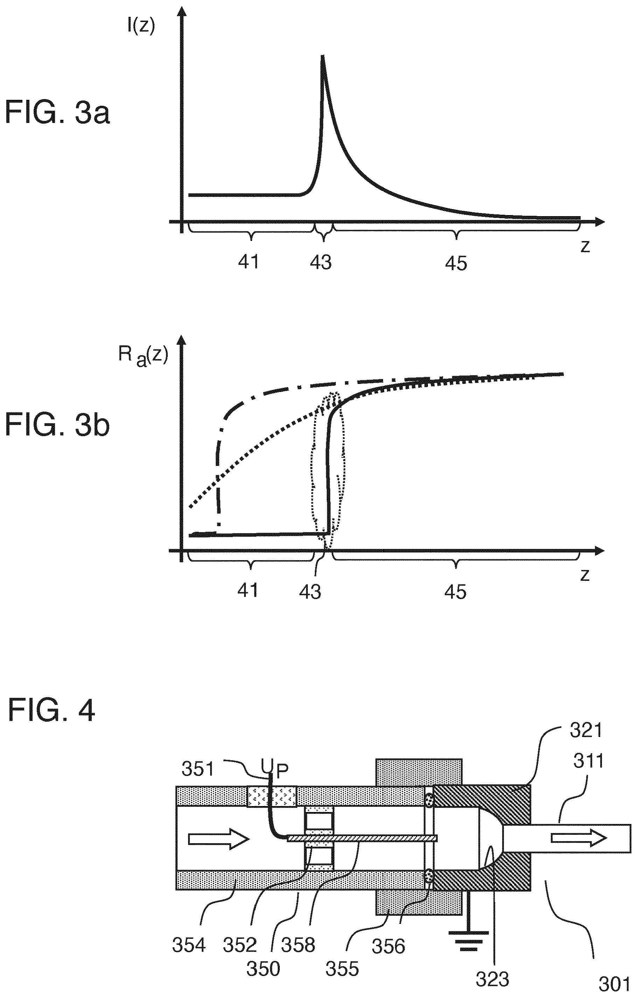

Anhand von Fign. 3a und 3b werden nun Aspekte des forcierten Plasmapolierens erläutert. Während des forcierten Plasmapolierens strömt ein Elektrolyt mit einer Temperatur von beispielsweise nicht weniger als etwa 80 °C durch die zu behandelnde Messrohranordnung, wobei eine Polierspannung zwischen einer zentralen Kathode und dem Messrohr angelegt wird, die ausreicht, um ein Plasma auszubilden, beispielsweise 350 V. Wenn das Plasma gebildet ist, entsteht an der Oberfläche der Messrohranordnung ein Gasblasenfilm, der aufgrund seines elektrischen Widerstands die Stromdichte im Bereich des Plasmas begrenzt. Durch den strömenden Elektrolyten werden größere Blasen und Abfall des Poliervorgangs kontinuierlich abtransportiert, so dass die Bedingungen des Plasmapolierens in einem Bereich 41, der dem forciert plasmapolierten Bereich der Messrohranordnung entspricht, stabil gehalten werden. Mit wachsendem Abstand von der zentralen Kathode nimmt die Feldstärke ab, so dass ab einem bestimmten Abstand das Plasma nicht mehr aufrechterhalten werden kann. Damit entfällt der elektrische Widerstand des Gasblasenfilms, und es setzt - wie in Fig. 3a gezeigt - eine deutlich höhere Stromdichtenspitze ein, die in einem Ätzabschnitt 43 insbesondere zum Freiätzen der Gefügestruktur führen kann. Mit zunehmendem Abstand zur zentralen Kathode nimmt die Feldstärke weiter ab, was auch eine mit dem Abstand sinkende Stromdichte zur Folge hat. Die bewirkt einen insbesondere kontinuierlichen Übergang zum konventionellen Elektropolieren der Oberfläche wobei die Qualität der Elektropolitur mit dem Abstand abnimmt, also die Rauheit mit dem Abstand zur Kathode ansteigt. Der resultierende Verlauf der Rauheit in Längsrichtung einer Messrohranordnung ist in Fig. 3b für eine forciert plasmapolierte Messrohranordnung schematisch als durchgezogene Linie dargestellt. Auf die geringe Rauheit im plasmapolierten Bereich 41 folgen ein Ätzabschnitt 43 mit Ätzung bis auf die Korngrenzen der Gefügestruktur, der mit Abstand zur Kathode in einen elektropolierten Abschnitt 45 mit einer gegenüber dem plasmapolierten Bereich 41 erhöhten Rauheit übergeht. Der plasmapolierte Abschnitt weist beispielsweise eine Oberflächenrauheit auf, die nicht mehr als Ra = 0,3 µm beträgt. Der elektropolierte Bereich 45 weist eine Rauheit von beispielsweise 0,8 µm bis 1 µm auf.

Die strichpunktierte Linie in Fig. 3b zeigt die resultierende Rauheit nach einer Behandlung der Messrohranordnung bei stillstehendem Elektrolyten, wobei dieser gemeinsam mit einer Elektrolyttemperatur von 80 °C und einer angelegten Polierspannung auch hier zur Ausbildung eines Plasmas führt. Jedoch steht die fehlende Elektrolytströmung stabilen Bedingungen bei einer ähnlich großen Spannung wie beim forcierten Plasmapolieren entgegen, da der Transport von Blasen und abgetragenem Material entfällt. Im Ergebnis lässt sich das Plasma nur über eine vergleichsweise kurze Strecke stabil aufrechterhalten. Die Abfolge der verschiedenen Bereiche ist ähnlich zu der nach dem forcierten Plasmapolieren, allerdings ist die Erstreckung des plasmapolierten Bereichs in Längsrichtung der Messrohranordnung nun erheblich verkürzt, wie bereits anhand der Schnittbilder der Fign. 2a und 2b erläutert wurde.

Die punktierte Linie in Fig 3b zeigt im Vergleich dazu den Rauheitsverlauf entlang der Messrohranordnung bei einer Behandlung durch reines Elektropolieren. Hierbei nimmt die Rauheit mit zunehmendem Abstand von einer zentralen Kathode zu.

Allen Beispielen der Fig. 3b ist gemein, dass die Kathode mit ihrer Kathodenspitze nahe einer dem Messrohr abgewandten Stirnfläche des Trägerkörpers positioniert war, also allenfalls nur sehr gering in die Bohrung des Trägerkörpers bzw. in das Messrohr hineinragte.

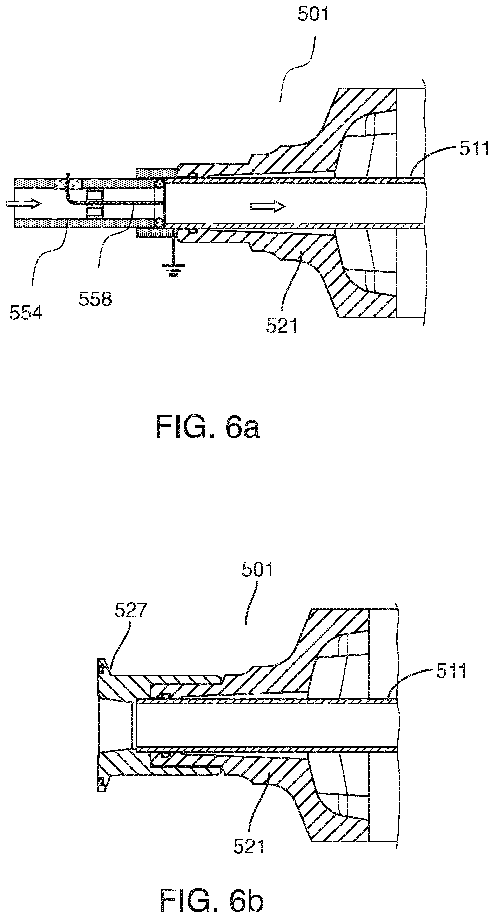

Ein Ausführungsbeispiel einer geeigneten Anordnung 350 zum forcierten Elektropolieren ist in Fig. 4 skizziert, wobei die Anordnung 350 eine zentrale stiftförmige Edelstahlkathode 358 aufweist, die mittels einer durchbohrten Scheibe 352 in einer zylindrischen Elektrolytleitung 354 auf deren Längsachse gehalten ist. Die Elektrolytleitung 354 weist endseitig eine Anschlussvorrichtung 355 auf, wobei zwischen einer Stirnfläche der Anschlussvorrichtung 355 und einer Stirnfläche eines Trägerkörpers 321 einer zu behandelnden Messrohranordnung 301 ein O-Ring 356 fluiddicht axial eingespannt ist. Ein Messrohr 311 der Messrohranordnung ist in einer durchgehenden Bohrung 323 des Trägerkörpers 321 fixiert. Der Trägerkörper kann insbesondere das Verteilerstück eines Coriolis-Massedurchflussmessaufnehmers sein. In diesem Ausführungsbeispiel sind die Elektrolytleitung und die Kathode vor der Stirnfläche des Trägerkörpers 323 positioniert. Dies ist jedoch nicht wesentlich für die Erfindung. So gibt es Ausgestaltungen, bei denen das forcierte Plasmapolieren direkt an der Stirnfläche des Messrohrs ansetzt.Erst nach dem forcierten Plasmapolieren wird an der Messrohranordnung ein Prozessanschluss montiert. Bei solch einer Ausgestaltung sind die Elektrolytleitung und die Kathode an der Stirnfläche eines Messrohrs zu positionieren, wie in Fig. 6a dargestellt ist. Während des Plasmapolierens einer Messrohranordnung 501 sind eine Elektrolytleitung 554 und eine Kathode 558 an der Stirnfläche eines Messrohrs 511 positioniert, welches aus einem Trägerkörper 521 herausragt. Nach dem erfindungsgemäßen Plasmapolieren wird ein Prozessanschlussflansch 527 an der Messrohranordnung montiert.

Wir wenden uns nun wieder Fig. 4 zu. Während des forcierten Plasmapolierens liegt die Messrohranordnung auf Schaltungsmasse, wobei eine Polierspannung Up von beispielsweise 350 V an der Kathode anliegt, wobei ein beispielsweise auf 80 °C vorgeheizter Elektrolyt durch die Elektrolytleitung gefördert wird, sodass er das Messrohr bzw. die Messrohre der Messrohranordnung mit einer Volumendurchflussrate pro durchströmbarer Querschnittsfläche der Messrohranordnung von beispielsweise 0,3 l / (min · cm²) durchströmt. Aufgrund der Positionierung der Kathode 358, vor der Messrohranordnung 301 werden die Feldverteilung, Ausbildung des Plasmas und der Transport von Polierabfällen, in keiner Weise durch Festkörper, wie die Kathode oder ihre Versorgungsleitung beeinträchtigt. Dies ist insbesondere bei Messrohren mit geringem Durchmesser oder gebogenen Messrohren ein erheblicher Vorteil. Zudem erfasst das forcierte Plasmapolieren einen Bereich der Messrohranordnung 301, der sich von der Stirnfläche des Trägerkörpers 321 bis in das Messrohr 311 hinein erstreckt und damit Beeinträchtigungen der Oberflächenqualität, die beispielsweise durch Befestigen der Messrohre in den Bohrungen bzw. durch Biegen der Messrohre aufgetreten sein können, weitestgehend korrigiert.

Wenn die Anordnung eine einzige Kathode aufweist, kann diese passend zu einer Symmetrie der Messrohranordnung im Bereich von deren Trägerkörper positioniert sein, also in einer Symmetrieebene, im Schnittpunkt zweier Symmetrieebenen, oder auf einer Achse einer Rotationssymmetrie. Wenn mehrere Kathoden vorgesehen sind, sollte die Gesamtheit der Kathoden eine Symmetrie aufweisen, die der Symmetrie des Trägerkörpers der Messrohranordnung folgt. Beispielsweise kann jeweils eine Kathode auf der Achse einer Bohrung zur Aufnahme eines Messrohrs angeordnet sein.

Abschließend werden die Verfahrensschritte eines Ausführungsbeispiels 400 des erfindungsgemäßen Verfahrens anhand von Fig. 5 diskutiert.

Das Verfahren beginnt mit dem Positionieren 410 einer Kathode und einer Elektrolytversorgungsleitung bezüglich einer Messrohranordnung, wobei die Kathode eine Spitze aufweist, die beispielsweise etwa in der Ebene einer Stirnfläche der Messrohranordnung positioniert ist.

Es folgt das Strömenlassen 420 eines Elektrolyten durch die Messrohranordnung mit einer Strömungsgeschwindigkeit von beispielsweise 8 cm/s, wobei der Elektrolyt durch die Elektrolytversorgungsleitung gefördert wird und auf eine Temperatur von etwa 80 °C geheizt ist, und wobei der Elektrolyt eine Ammoniumsulfat-Lösung aufweist, welcher Schwefelsäure zugesetzt ist. Die Leitfähigkeit des Elektrolyten beträgt nicht mehr als beispielsweise 350 mS/cm. Mit der solchermaßen begrenzten Leitfähigkeit ist sichergestellt, dass das zum Plasmapolieren erforderliche elektrische Potential nicht über eine zu kurze Strecke abgebaut wird

Bei strömendem Elektrolyten folgt das Anlegen 430 einer elektrischen Polierspannung Up von beispielsweise 350 V zwischen der Kathode und der Messrohranordnung, die ausreichen ist, um ein Plasma in einem Abschnitt der Messrohranordnung aufrechtzuerhalten, der sich über einige Innendurchmesser des Messrohrs in die Messrohranordnung erstreckt. Durch das Anlegen der elektrischen Polierspannung entsteht ein Plasma mit einer Gasblasenschicht an der Oberfläche der Messrohranordnung, welches durch den strömenden Elektrolytenstabilisiert wird, wobei Oberflächendefekte der Messrohranordnung durch das Plasmapolieren behoben werden. Wie weiter oben erläutert, bricht das Plasma in einiger Entfernung zur Kathode zusammen, da dort die Feldstärke zur Aufrechterhaltung des Plasmas nicht ausreicht. Da somit die Gasschicht als elektrischer Widerstand entfällt, treten hier in einem lokal begrenzten Bereich hohe Stromdichten auf, die ein Freiätzen der Korngrenzen der Gefügestruktur bewirken. Im daran anschließenden Bereich geringerer verbleibender Feldstärken folgt gewissermaßen konventionelles Elektropolieren dessen Wirksamkeit mit der Entfernung zur Kathode abnimmt, wie weiter oben erläutert.

Nach beispielsweise 5 Minuten ist für Messrohranordnungen mit einem Messrohrinnendurchmesser von nicht mehr als 1 cm das Ende 440 der Polierzeit erreicht, denn im forciert Plasmapolierten Bereich ist eine ausreichend gute Oberflächenqualität mit beispielsweise einer Rauheit Ra < 0,4 µm erzielt.

Es folgt noch eine Schlussbehandlung 450, die insbesondere ein Ausspülen der Messrohranordnung umfasst, um den Elektrolyten rückstandsfrei zu entfernen.

## Patentansprüche

1. Messrohranordnung (10), umfassend:
zwei Trägerkörper (21, 22) mit jeweils mindestens einer Bohrung (23, 24, 25, 26); und
mindestens ein Messrohr (11, 12) mit einem Lumen zum Führen eines Mediums,
wobei das Messrohr (11, 12) einen ersten Endabschnitt und einen zweiten Endabschnitt aufweist, die jeweils mit einem der Trägerkörper (21, 22) verbunden sind, wobei die Bohrungen (23, 24, 25, 26) der Trägerkörper über das Lumen des Messrohrs miteinander kommunizieren,
wobei die Messrohranordnung(10) einen forciert plasmapolierten Abschnitt (41, 42) aufweist, der sich in einem Bereich in dem der Strömungsquerschnitt nicht mehr als der Querschnitt des mindestens einen Messrohrs umfasst, über mindestens drei, insbesondere mindestens vier Durchmesser des mindestens einen Messrohrs erstreckt, wobei auf den forciert plasmapolierten Abschnitt (41, 42) ein Ätzabschnitt (43, 44) folgt, wobei der Ätzabschnitt (43, 44) eine andere Oberflächenstruktur aufweist als der forciert plasmapolierte Abschnitt (41, 42),
wobei das Messrohr einen zumindest abschnittsweise gekrümmten Verlauf mit mindestens einem Bogen aufweist, welcher einen Winkel von nicht weniger als 20° überstreicht, wobei der Bogen beispielsweise einen Krümmungsradius von nicht mehr als 10, Innendurchmessern des Messrohrs aufweist, wobei der forciert plasmapolierte Abschnitt den zumindest einen Bogen über zumindest die Hälfte der Länge des zumindest einen Bogens umfasst,
wobei der Innendurchmesser des Messrohrs nicht mehr als 30 mm beträgt.

2. Messrohranordnung (10) nach Anspruch 1, wobei der forciert plasmapolierte Abschnitt (41, 42) eine Oberflächenrauheit Ra aufweist, die nicht mehr als Ra = 0,4 µm, insbesondere nicht mehr als Ra = 0,3 µm beträgt.

3. Messrohranordnung (10) nach Anspruch 1 oder 2, wobei das Messrohr ein metallisches Gefüge aufweist, und wobei der Ätzabschnitt eine Oberflächenstruktur aufweist, in welcher Korngrenzen des metallischen Gefüges freigeätzt sind.

4. Messrohranordnung (10) nach einem der vorhergehenden Ansprüche, wobei der mindestens eine Bogen einen Winkel von nicht weniger als 30° überstreicht, wobei der Bogen beispielsweise einen Krümmungsradius von nicht mehr als 6 Innendurchmessern des Messrohrs aufweist, wobei der forciert plasmapolierte Abschnitt den zumindest einen Bogen über zumindest zwei Drittel der Länge des zumindest einen Bogens umfasst.

5. Messrohranordnung (10) nach einem der vorhergehenden Ansprüche, wobei der Innendurchmesser des Rohrs, insbesondere Messrohrs nicht mehr 15 mm und insbesondere nicht mehr als 10 mm beträgt.

6. Messaufnehmer (1), umfassend eine Messrohranordnung (10) nach einem der vorhergehenden Ansprüche, einen Grundkörper (20), welcher die beiden Trägerkörper (21, 22) biegesteif miteinander verbindet, einen elektrodynamischen Erreger zum Anregen von Biegeschwingungsmoden, mindesten einen Schwingungssensor zum Erfassen von Biegeschwingungen des Messrohrs.

7. Messaufnehmer nach Anspruch 6, wobei die Messrohranordnung zwei parallel geführte Messrohre, wobei der elektrodynamische Erreger dazu eingerichtet ist, Biegeschwingungen in mindestens einer Biegeschwingungsmode zwischen den Messrohren anzuregen, und wobei der zumindest eine Schwingungssensor dazu eingerichtet ist, Biegeschwingungen zwischen den Messrohren zu erfassen.

8. Verfahren zum abschnittsweisen Plasmapolieren einer Messrohranordnung, um eine Messrohranordnung nach einem der Ansprüche 1 bis 7 zu erhalten, umfasst:
Positionieren einer Kathode und einer Elektrolytversorgungsleitung bezüglich einer Messrohranordnung, wobei die Kathode eine Spitze aufweist, die nicht mehr als vier, beispielsweise nicht mehr als zwei und insbesondere nicht mehr als einen Innendurchmesser eines Messrohrs der Messrohranordnung von einer Stirnfläche der Messrohranordnung beabstandet ist;
Strömenlassen eines Elektrolyten durch die Messrohranordnung;
und Anlegen einer elektrischen Spannung zwischen der Kathode und der Messrohranordnung, die ausreichen ist, um ein Plasma in einem Abschnitt der Messrohranordnung aufrechtzuerhalten, der sich von einer Stirnfläche der Messrohranordnung über eine Länge von nicht weniger als vier, insbesondere nicht weniger als sechs und bevorzugt nicht weniger als acht Innendurchmesser des Messrohrs in die Messrohranordnung erstreckt,
wobei die Messrohranordnung zwei Trägerkörper mit jeweils mindestens einer Bohrung; und mindestens ein Messrohr mit einem Lumen zum Führen eines Mediums, umfasst, wobei Endabschnitte des mindestens einen Messrohrs jeweils mit einem der Trägerkörper verbunden sind, wobei mindestens ein Endabschnitt des Messrohrs forciert plasmapoliert ist.

9. Verfahren nach Anspruch 8, wobei der Elektrolyt eine Volumendurchflussrate pro durchströmbarer Querschnittsfläche der Messrohranordnung aufweist, die nicht weniger als 0,1 I/(min · cm²), beispielsweise nicht weniger als 0,2 I/(min · cm²) und insbesondere nicht weniger als 0,3 I/(min · cm²) beträgt, und/oder
wobei der Elektrolyt eine Volumendurchflussrate pro durchströmbarer Querschnittsfläche der Messrohranordnung, die nicht mehr als 4 I/(min · cm²), beispielsweise nicht mehr als 2 I/(min · cm²) und insbesondere nicht weniger als 1 I/(min · cm²) beträgt.

10. Verfahren nach einem der Ansprüche 8 bis 9, wobei die angelegte Spannung nicht weniger als 250 V, insbesondere nicht weniger als 300 V beträgt, und/oder wobei die angelegte Spannung nicht mehr als 500 V, insbesondere nicht mehr als 400 V beträgt.

11. Verfahren nach einem der Ansprüche 8 bis 10 wobei der Elektrolyt mit einer Temperatur von nicht weniger als 70°C insbesondere nicht weniger als 80°C durch das Messrohr strömt.

12. Verfahren nach einem der Ansprüche 8 bis 11, wobei das Plasma bei strömendem Elektrolyten für eine Zeitspanne von nicht weniger als 2 min insbesondere nicht weniger als 3 min aufrechterhalten wird; und/oder
wobei das Plasma bei strömendem Elektrolyten für eine Zeitspanne von nicht mehr als 10 min, insbesondere nicht mehr als 5 min aufrechterhalten wird.

13. Verfahren nach einem der Ansprüche 8 bis 12, wobei der Elektrolyt Ammoniumsulfat und ggf. Schwefelsäure aufweist.

14. Verfahren nach einem der Ansprüche 8 bis 13, wobei der Elektrolyt eine Leitfähigkeit von nicht mehr als 500 S/cm, insbesondere nicht mehr als 400 mS/cm und bevorzugt nicht mehr als 350 mS/cm aufweist.

## Claims

1. A measuring tube assembly (10), comprising:
Two support bodies (21, 22) each with at least one bore (23, 24, 25, 26); and
at least one measuring tube (11, 12) with a lumen for conducting a medium,
wherein the measuring tube (11, 12) has a first end section and a second end section, each of which is connected to one of the support bodies (21, 22), wherein the bores (23, 24, 25, 26) of the support bodies communicate with each other via the lumen of the measuring tube,
wherein the measuring tube assembly (10) comprises a section polished by forced electrolytic plasma polishing (41, 42), which extends over at least three, in particular at least four, diameters of the at least one measuring tube in an area in which the flow cross-section is equal to no more than the cross-section of the at least one measuring tube, wherein the section polished by forced electrolytic plasma polishing (41, 42) is followed by an etched section (43, 44), wherein the etched section (43, 44) has a different surface texture from the section polished by forced electrolytic plasma polishing (41, 42),
wherein at least some sections of the measuring tube are curved with at least one bend spanning an angle of not less than 20°, wherein the bend has, for example, a radius of curvature equal to no more than 10 internal diameters of the measuring tube, wherein the section polished by forced electrolytic polishing comprises the at least one bend extending over at least half the length of the at least one bend,
wherein the internal diameter of the measuring tube is equal to no more than 30 mm.

2. The measuring tube assembly (10) as claimed in claim 1, wherein the section polished by forced electrolytic plasma polishing (41, 42) has a surface roughness Ra which is equal to no more than Ra = 0.4 µm, in particular no more than Ra = 0.3 µm.

3. The measuring tube assembly (10) as claimed in claim 1 or 2, wherein the measuring tube has a metallic structure, and wherein the etched section has a surface texture in which grain boundaries of the metallic structure are exposed by etching.

4. The measuring tube assembly (10) as claimed in one of the preceding claims, wherein the at least one bend spans an angle of not less than 30°, wherein the bend has, for example, a radius of curvature equal to no more than 6 internal diameters of the measuring tube, wherein the section polished by forced electrolytic polishing comprises the at least one bend extending over at least two thirds of the length of the at least one bend.

5. The measuring tube assembly (10) as claimed in one of the preceding claims, wherein the internal diameter of the tube, in particular the measuring tube, is equal to no more than 15 mm, and in particular no more than 10 mm.

6. A measuring transducer (1), comprising a measuring tube assembly (10) as claimed in one of the preceding claims, a basic body (20) which provides a rigid connection between the two support bodies (21, 22), an electrodynamic exciter for initiating bending oscillation modes and at least one oscillation sensor for detecting bending oscillations of the measuring tube.

7. The measuring transducer as claimed in claim 6, wherein the measuring tube assembly comprises two measuring tubes guided in parallel, wherein the electrodynamic exciter is configured to initiate bending oscillations between the measuring tubes in at least one bending oscillation mode, and wherein the at least one oscillation sensor is configured to detect bending oscillations between the measuring tubes.

8. A method for plasma polishing sections of a measuring tube assembly in order to produce a measuring tube assembly as claimed in one of claims 1 to 7, comprising:
Positioning a cathode and an electrolyte supply line relative to a measuring tube assembly, wherein the cathode has a tip which is placed at a distance of no more than four, for example no more than two, and in particular no more than one, internal diameter(s) of a measuring tube in the measuring tube assembly away from an end face of the measuring tube assembly;
having an electrolyte flow through the measuring tube assembly;
and applying an electrical voltage between the cathode and the measuring tube assembly, which is sufficient for maintaining a plasma in a section of the measuring tube assembly which extends from an end face of the measuring tube assembly into the measuring tube assembly over a length of no less than four, in particular no less than six, and preferably no less than eight, internal diameters of the measuring tube,
wherein the measuring tube assembly comprises two support bodies each with at least one bore; and at least one measuring tube with a lumen for conducting a medium,
wherein each end section of the at least one measuring tube is connected to one of the support bodies, wherein at least one end section of the measuring tube is polished by forced electrolytic plasma polishing.

9. The method as claimed in claim 8, wherein the electrolyte has a volumetric flow rate per cross-sectional area of the measuring tube assembly which can conduct medium of not less than 0.1 l/(min · cm²), for example not less than 0.2 l/(min · cm²), and in particular not less than 0.3 l/(min · cm²), and/or
wherein the electrolyte has a volumetric flow rate per cross-sectional area of the measuring tube assembly which can conduct medium of not more than 4 l/(min · cm²), for example not more than 2 l/(min · cm²), and in particular not less than 1 l/(min · cm²).

10. The method as claimed in one of claims 8 to 9, wherein the applied voltage is equal to no less than 250 V, in particular no less than 300 V, and/or wherein the applied voltage is equal to no more than 500 V, in particular no more than 400 V.

11. The method as claimed in one of claims 8 to 10, wherein the electrolyte flows through the measuring tube at a temperature of not less than 70 °C, in particular not less than 80 °C.

12. The method as claimed in one of claims 8 to 11, wherein the plasma is maintained for a time period of no less than 2 min, in particular no less than 3 min, when the electrolyte is flowing; and/or
wherein the plasma is maintained for a time period not exceeding 10 min, in particular not exceeding 5 min, when the electrolyte is flowing.

13. The method as claimed in one of claims 8 to 12, wherein the electrolyte contains ammonium sulfate and possibly sulfuric acid.

14. The method as claimed in one of claims 8 to 13, wherein the electrolyte has a conductivity of not more than 500 S/cm, in particular not more than 400 mS/cm, and preferably not more than 350 mS/cm.

## Revendications

1. Agencement de tubes de mesure (10), comprenant :
deux corps de support (21, 22) comportant chacun au moins un alésage (23, 24, 25, 26) ; et
au moins un tube de mesure (11, 12) comportant un canal intérieur destiné à guider un produit,
le tube de mesure (11, 12) comportant une première partie d'extrémité et une deuxième partie d'extrémité, lesquelles sont respectivement reliées à l'un des corps de support (21, 22), les alésages (23, 24, 25, 26) des corps de support communiquant entre eux par l'intermédiaire du canal intérieur du tube de mesure,
l'agencement de tubes de mesure (10) comportant une section soumise à un polissage forcé au plasma (41, 42), laquelle section s'étend, dans une zone où la section d'écoulement ne dépasse pas la section transversale de l'au moins un tube de mesure, sur au moins trois, notamment au moins quatre diamètres de l'au moins un tube de mesure, la section soumise à un polissage forcé au plasma (41, 42) étant suivie d'une section gravée (43, 44), la section gravée (43, 44) présentant une structure de surface différente de celle de la section soumise à un polissage forcé au plasma (41, 42),
le tube de mesure présentant un tracé courbe au moins par sections, avec au moins un coude formant un angle d'au moins 20°, le coude présentant par exemple un rayon de courbure ne dépassant pas 10 diamètres intérieurs du tube de mesure, la partie soumise à un polissage forcé au plasma englobant l'au moins un coude sur au moins la moitié de la longueur de ce dernier,
le diamètre intérieur du tube de mesure ne dépassant pas 30 mm.

2. Agencement de tubes de mesure (10) selon la revendication 1, pour lequel la partie soumise à un polissage forcé au plasma (41, 42) présente une rugosité de surface Ra qui ne dépasse pas Ra = 0,4 pm, et notamment ne dépasse pas Ra = 0,3 pm.

3. Agencement de tubes de mesure (10) selon la revendication 1 ou 2, pour lequel le tube de mesure est constitué d'une structure métallique, et la partie gravée présentant une structure de surface dans laquelle les joints de grains de la structure métallique sont mis à nu par gravure.

4. Agencement de tubes de mesure (10) selon l'une des revendications précédentes, pour lequel l'au moins un coude forme un angle d'au moins 30°, le coude présentant par exemple un rayon de courbure ne dépassant pas 6 diamètres intérieurs du tube de mesure, la partie soumise à un polissage au plasma forcé s'étendant sur l'au moins un coude sur au moins deux tiers de la longueur de l'au moins un coude.

5. Agencement de tubes de mesure (10) selon l'une des revendications précédentes, pour lequel le diamètre intérieur du tube, notamment du tube de mesure, n'est pas supérieur à 15 mm et notamment n'est pas supérieur à 10 mm.

6. Capteur (1), comprenant un agencement de tubes de mesure (10) selon l'une des revendications précédentes, un corps de base (20), lequel corps relie entre eux de manière rigide en flexion les deux corps de support (21, 22), un excitateur électrodynamique destiné à exciter des modes de vibration de flexion, au moins un capteur de vibrations destiné à mesurer les vibrations de flexion (15) du tube de mesure.

7. Capteur selon la revendication 6, pour lequel l'agencement de tubes de mesure comprend deux tubes de mesure disposés parallèlement, l'excitateur électrodynamique étant conçu pour exciter des vibrations de flexion dans au moins un mode de vibration de flexion entre les tubes de mesure, et l'au moins un capteur de vibrations étant conçu pour mesurer les vibrations de flexion entre les tubes de mesure.

8. Procédé destiné au polissage au plasma par sections d'un agencement de tubes de mesure, lequel procédé est destiné à obtenir un agencement de tubes de mesure selon l'une des revendications 1 à 7, lequel procédé comprend les étapes suivantes :
Positionnement d'une cathode et d'une conduite d'alimentation en électrolyte par rapport à un agencement de tubes de mesure, la cathode comportant une pointe qui est espacée d'une face d'extrémité de l'agencement de tubes de mesure d'une distance ne dépassant pas quatre, par exemple ne dépassant pas deux et notamment ne dépassant pas un diamètre intérieur d'un tube de mesure de l'agencement de tubes de mesure ;
Écoulement d'un électrolyte à travers l'agencement de tubes de mesure ; et
Application d'une tension électrique entre la cathode et l'agencement de tubes de mesure, laquelle tension est suffisante pour maintenir un plasma dans une partie de l'agencement de tubes de mesure s'étendant à partir d'une face d'extrémité de l'agencement de tubes de mesure sur une longueur d'au moins quatre, notamment d'au moins six et de préférence d'au moins huit diamètres intérieurs du tube de mesure à l'intérieur de l'agencement de tubes de mesure,
l'agencement de tubes de mesure comprenant deux corps de support comportant chacun au moins un alésage ; et au moins un tube de mesure doté d'un canal intérieur destiné à guider un produit, les parties d'extrémité de l'au moins un tube de mesure étant chacune reliées à l'un des corps de support, au moins une partie d'extrémité du tube de mesure étant soumise à un polissage forcé au plasma.

9. Procédé selon la revendication 8,
pour lequel l'électrolyte présente un débit volumétrique par surface de section transversale traversable de l'agencement de tubes de mesure qui n'est pas inférieur à 0,1 l/(min • cm²), par exemple pas inférieur à 0,2 l/(min • cm²) et notamment pas inférieur à 0,3 l/(min • cm²), et/ou
pour lequel l'électrolyte présente un débit volumétrique par section transversale traversable de l'agencement de tubes de mesure qui n'est pas supérieur à 4 l/(min • cm²), par exemple pas supérieur à 2 l/(min • cm²) et notamment pas inférieur à 1 l/(min • cm²).

10. Procédé selon l'une des revendications 8 à 9,
pour lequel la tension appliquée n'est pas inférieure à 250 V, notamment pas inférieure à 300 V, et/ou
pour lequel la tension appliquée n'est pas supérieure à 500 V, notamment pas supérieure à 400 V.

11. Procédé selon l'une des revendications 8 à 10, pour lequel l'électrolyte s'écoule à travers le tube de mesure à une température non inférieure à 70 °C, notamment non inférieure à 80 °C.

12. Procédé selon l'une des revendications 8 à 11,
pour lequel le plasma est maintenu, en présence d'un électrolyte en écoulement, pendant une durée d'au moins 2 minutes, notamment d'au moins 3 minutes ; et/ou
pour lequel le plasma est maintenu, en présence d'un électrolyte en écoulement, pendant une durée ne dépassant pas 10 minutes, notamment ne dépassant pas 5 minutes.

13. Procédé selon l'une des revendications 8 à 12, pour lequel l'électrolyte comprend du sulfate d'ammonium et, le cas échéant, de l'acide sulfurique.

14. Procédé selon l'une des revendications 8 à 13, pour lequel l'électrolyte présente une conductivité ne dépassant pas 500 mS/cm, notamment ne dépassant pas 400 mS/cm et, de préférence, ne dépassant pas 350 mS/cm.
